# EUROPÄISCHE PATENTSCHRIFT

(11) **EP 4 233 144 B1**
(45) Veröffentlichungstag und Bekanntmachung des Hinweises auf die Patenterteilung: **10.07.2024**
(21) Anmeldenummer: 21793935.4
(22) Anmeldetag: 18.10.2021
(51) Int. Cl.: H02J 7/00, H01M 50/20, H01M 10/48, H01M 10/6567, H01M 10/658, H01M 50/202, H01M 50/30, H01M 50/209

(54) **SCHUTZGEHÄUSE FÜR BATTERIEN**
PROTECTIVE HOUSING FOR BATTERIES
BOÎTIER DE PROTECTION POUR BATTERIES

(30) Priorität: 23.10.2020 IT 202000025162
(43) Veröffentlichungstag der Anmeldung: 30.08.2023
(73) Patentinhaber: Eco-Research, 39100 Bozen (BZ) (IT)
(72) Erfinder: TIRLER, Werner, 39100 Bolzano (IT); VOTO, Giulio, 39100 Bolzano (IT)
(74) Vertreter: Ausserer, Anton
(86) Internationale Anmeldenummer: PCT/EP2021/078754
(87) Internationale Veröffentlichungsnummer: WO 2022/084220

(56) Entgegenhaltungen:
- CN-A- 107 785 954
- CN-A- 107 785 954
- CN-U- 204 130 610
- CN-U- 204 130 610
- US-A1- 2020 220 135
- US-A1- 2020 220 135

## Beschreibung

Die Erfindung betrifft ein Schutzgehäuse für Batterien, Akkumulatoren und elektrisch aufladbare Zellen sowie alle Mittel, die zur Speicherung elektrischer Energie dienen.

Durch den vermehrten Einsatz von wieder aufladbaren Batterien und Akkumulatoren stellt sich zunehmend das Problem des Umgangs mit Batterien und Akkumulatoren, die häufig mit Photovoltaikanlagen verbunden sind, als Sicherheit bei fehlendem Strom aus dem Netz oder die z.B. zum Betrieb von Fahrzeugen wie Fahrrädern u. ä. verwendet werden, d.h. die aus dem Elektrofahrzeug entnommen und in Gebäuden u. ä. aufgeladen werden können.

Von diesen Akkus und/oder Batterien geht ein Explosionsrisiko aus, so dass die Gefahr besteht, dass Gebäude und Wohnungen in Brand geraten und/oder die Einsatzkräfte nicht eingreifen können, um die Flammen zu löschen, weil die Gefahr einer Explosion der Batterien, Akkus und wieder aufladbaren elektrischen Zellen besteht.

Selbst kleine Batterien, die z. B. zum Antrieb von Fahrrädern und Elektrorollern verwendet werden, können während der Ladephase der Batterie einen Brand verursachen.

Mit dem weit verbreiteten Einsatz von Photovoltaikanlagen entsteht auch die Notwendigkeit, überschüssige elektrische Energie in Form von Akkumulatoren, Batterien oder ähnlichem zu speichern. Diese sind oft in die Hauswand integriert und haben eine Speicherkapazität von durchschnittlich 10 KWh und eine Größe von ca. 0,2 m³. Mit diesen Systemen ist es möglich, den täglichen Strombedarf auch bei bedecktem Himmel zu decken. Zu den Aspekten, die den breiten Einsatz dieser sehr praktischen Systeme einschränken, gehört der Sicherheitsaspekt. Im Falle einer Störung und angesichts der beträchtlichen Energieladung ist es möglich, dass das System überhitzt und das ganze Haus in Brand gerät.

Um diese Gefahr zu vermeiden, ist es notwendig, die mögliche Überhitzung des elektrischen Energiespeichers zu begrenzen. Mit der vorliegenden Erfindung soll dieses Risiko auf ein Minimum reduziert werden. Im Brandfall wird aufgrund seiner hohen Wärmekapazität und der einfachen Handhabung häufig Wasser zum Löschen verwendet. Bei dem vorgeschlagenen Verfahren wird Wasser auch als Energieabsorber verwendet, der im Falle einer Störung aus dem Speichersystem freigesetzt werden könnte. Bei Akkumulatoren mit einer Kapazität von 10 KWh kann eine Wärmeenergie von ca. 8.500 Kcal freigesetzt werden, die das System auf eine sehr gefährliche Temperatur überhitzen kann.

Es ist eine Vielzahl von Gehäusen bekannt, die Batterien, Akkumulatoren, aufladbare elektrische Zellen vor einem Brand von außen schützen und/oder die das Äußere vor einer möglichen Explosion schützen, die möglicherweise zu einem Batteriebrand führt.

Seit US 20050170238 ist ein Gehäuse aus einem polymeren Material bekannt, das gegen Flammen resistent ist und einen Hitzeschild zum Schutz eines Geräts mit einer Batterie im Inneren bietet.

Das chinesische Gebrauchsmuster CN205543089 beschreibt eine Lithium-Ionen-Batterie mit einer äußeren Dichtungsschale, in der die abzudichtende Batterie untergebracht ist. Zwischen der Dichtungsschale und der Batterie verbleibt ein Hohlraum. Der Hohlraum ist mit Schutzgas gefüllt und muss an seinem negativen Ende einen eloxierten Stab aufweisen. Es gibt Ventile zum Entlüften und Befüllen des Gases.

Die beschriebene Hülle hat den Zweck, die Erwärmung der Batterie durch ihre eigene Erwärmung zu vermeiden.

Dokument CN204130610U zeigt eine wassergekühlte, temperaturgeregelte Batteriebox.

Es ist ein Ziel der vorliegenden Erfindung, ein Schutzgehäuse für Batterien, Akkumulatoren und elektrische Zellen zu realisieren, das die Energie im Inneren des Akkumulators usw. absorbiert und dadurch die Gefahr eines Brandes verringert und/oder beseitigt und/oder eine Explosion während eines Brandes verhindert, weil es die potentielle Energie im Inneren der Batterie usw. ableitet.

Dieses Ziel wird durch ein Schutzgehäuse für Batterien, Akkumulatoren und elektrische Zellen gemäß dem kennzeichnenden Teil des Anspruchs 1 erreicht.

Es wird ein Schutzgehäuse für Batterien, Akkumulatoren und elektrische Zellen vorgeschlagen, das eine innere Kammer zur Aufnahme einer Batterie, eines Akkumulators und/oder elektrischer Zellen umfasst. Erfindungsgemäß ist in dem Gehäuse mindestens eine Kammer ausgebildet. Diese Kammer verfügt über mindestens eine Fläche, die mindestens eine Wand des Gehäuses bildet, und bildet einen mit einem in ihr aufgenommenen Gegenstand ausgebildeten Hohlraum, in dem sich Wasser (H2O) befindet, und dieser Hohlraum besitzt mindestens ein Einwegventil zum Abbau eines Überdrucks und einen Einlasskanal zum Füllen der Hohlraum mit Wasser Vorzugsweise ist die Kammer durch eine Tür zugänglich. In einer weiteren Ausführungsform sind die Batterie, der Akkumulator und/oder die elektrischen Zellen im Inneren des Gehäuses angebracht. Vorteilhafterweise sind die Außenwände des Gehäuses nach außen hin isoliert, d. h. sie lassen keine Wärmeübertragung zwischen der Außenseite und dem Hohlraum, in der sich das Wasser befindet, und/oder der Kammer, in der die Batterie, der Akkumulator und/oder die elektrische Zelle angeordnet ist, zu.

Der Innenraum des Gehäuses, in dem die Batterie, der Akkumulator und/oder die elektrische Zelle angeordnet ist, ist mit mindestens einer Stromversorgungsleitung z. B. zum Laden der Batterie verbunden. Vorteilhafterweise ist die Batterie sowohl am Eingang als auch am Ausgang mit dem elektrischen System des Hauses verbunden, so dass sie als Backup fungiert, wenn sie beispielsweise tagsüber durch die Energie der Photovoltaik-Paneele aufgeladen wird und abends das Haus mit Strom versorgt, wenn kein Strom von der Photovoltaik-Anlage ankommt.

Nachfolgend wird ein Beispiel eines erfindungsgemäßen Schutzgehäuses anhand einer beigefügten Figur in nicht einschränkender Weise beschrieben. Es zeigt:

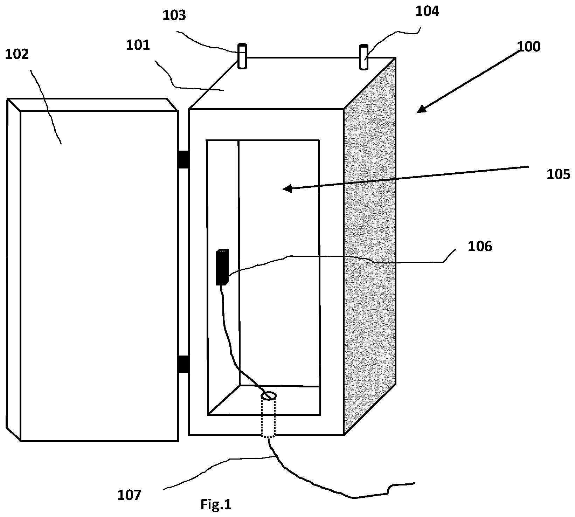

Figur 1: eine schematische perspektivische Ansicht eines Schutzkastens in einer bevorzugten Ausführungsform des erfindungsgemäßen Systems.

Figur 1 zeigt mit der Bezugsziffer 100 ein Schutzgehäuse für Batterien, Akkumulatoren und/oder elektrische Ladezellen. Dieses Gehäuse 100 besitzt einen Körper 101, der einen Innenraum bildet, einer Kammer 105, in der die Batterie angeordnet werden kann. Die in der Kammer 105 angeordnete Batterie kann nur zum Aufladen der Batterie in die Kammer eingelegt werden, z. B. mittels einer Stromversorgung 106, die über ein Kabel 107 an ein externes Netz angeschlossen ist, oder in einer weiteren Form der Abstrahlung kann eine Batterie, ein Akkumulator, eine elektrische Ladezelle fest in der Kammer 105 angeordnet sein. Bei der zweiten, nicht abgebildeten Variante, bei der die Batterie fest in der Kammer 105 des Schutzgehäuses 100 angeordnet ist, ist eine Tür für den Zugang zum Innenraum nicht erforderlich.

Es können auch mehrere Batterien gleichzeitig im Innenraum angeordnet werden. Der Innenraum ist thermisch mit einem in der Wand des Schutzkastens ausgebildeten Hohlraum verbunden. Dieser Hohlraum ist beispielsweise durch eine Metallfläche verbunden, die die Wärme aus der Kammer in den Hohlraum leitet. Der Hohlraum ist mit einem Rohr und/oder einem Zugangsrohr versehen, durch das der Hohlraum mit Wasser gefüllt wird. Die Wassermenge wird entsprechend der Kapazität der in der Kammer 105 angeordneten Batterien eingestellt. Die Hohlraum hat einen Auslass 104, der durch ein Ablassventil geregelt ist, um einen Überdruck abzubauen, der entsteht, wenn durch das Erhitzen der Batterie das Wasser erhitzt wird und in einen gasförmigen Zustand übergeht, und, um das Risiko einer Explosion zu vermeiden, wird dieses Wasser durch das Ablassventil abgelassen. Vorzugsweise weist das Gehäuse einen Mantel um die Kammer 105 auf. In einer bevorzugten Ausführungsform können mehrere Hohlräume um die Kammer 105 herum angeordnet sein. Diese Hohlräume können miteinander in Verbindung stehen oder voneinander getrennt sein. In einer bevorzugten Ausführungsform kann in der Tür 102 auch ein Hohlraum zur Aufnahme von Wasser angeordnet sein.

Jeder Hohlraum ist stets mit dem Innenraum, der Kammer 105, thermisch verbunden.

Vorteilhafterweise weist das Schutzgehäuse eine wärmeisolierende Außenfläche, die eine Wärmeübertragung von außen in die in den Wänden der Schutzgehäuse gebildete Kammer verhindert.

Dies ist für den Fall vorgesehen, dass sich außerhalb ein Feuer entwickelt und die Hitze des Feuers das Wasser in einer zweiten Phase verdampft. Wenn die Batterie und/oder die Batterien in der Kammer überhitzen, gibt es nicht mehr genug Wasser, um diese Hitze zu absorbieren, und es besteht die Gefahr einer Explosion der Batterie oder der Batterie im Inneren des Raums innerhalb des Schutzkastens.

Das System kann einfach mit Wasser gefüllt werden, um sicherzustellen, dass eventuelle Leckagen ausgeglichen werden.

Am Auslassventil 103 kann eine Detektions- und/oder Signaleinrichtung angebracht werden, die einen Alarm auslöst, wenn Dämpfe aus der/den Kammer(n) entweichen. Auf diese Weise wird signalisiert, dass in der Kammer 105 und/oder im Schutzgehäuse eine Überhitzung vorliegt. Vorteilhafterweise kann durch diesen Dampfaustritt auch die elektrische Verbindung zum Innenraum, der Kammer 105, unterbrochen werden, um die Stromversorgung zu unterbrechen und damit die Gefahr einer Überhitzung und/oder Zerstörung der Batterie in der Innenkammer 105 zu verringern.

Bei Batterien, die als Energiereserven dienen, z. B. für Photovoltaikanlagen, können mehrere Innenräume vorhanden sein, in denen die einzelnen Einheiten untergebracht sind, und somit eine oder mehrere Kammern mit Wasser, das im Falle einer Störung im Innenraum die entstehende Wärme aufnimmt.

Diese Systeme sind vorzugsweise nicht von außen zugänglich, damit niemand auf die Batterien zugreifen kann.

Das Wasser, das in den Hohlräumen mit mindestens einer Oberfläche in thermischem Kontakt mit der Kammer 105 angeordnet ist, kann mindestens 30 % mehr thermische Energie aufnehmen als die Energie, die in den in der Kammer105 angeordneten Batterien, Akkumulatoren und/oder Ladezellen vorhanden ist.

Die zuvor beschriebenen Varianten des Systems mit dem Verfahren dienen nur dem besseren Verständnis des Verfahrens, der Funktionsweise und der Eigenschaften der vorgestellten Lösung; sie schränken die Offenbarung durch die Ausführungsbeispiele nicht ein. Die Abbildungen sind schematisch, wobei wesentliche Eigenschaften und Wirkungen teilweise deutlich vergrößert dargestellt werden, um Funktionen, Wirkungsprinzipien, Konfigurationen und technische Merkmale hervorzuheben. Dementsprechend kann jede Funktion, jedes Prinzip, jede technische Konfiguration und jedes Merkmal, die in den Figuren oder im Text offenbart sind, frei und in beliebiger Weise mit allen Ansprüchen, jedem Merkmal im Text und in den anderen Figuren, anderen Funktionen, Prinzipien, Konfigurationen und technischen Merkmalen, die in dieser Offenbarung enthalten sind oder sich daraus ergeben, kombiniert werden, so dass alle denkbaren Kombinationen der beschriebenen Lösung zuzuordnen sind. Dazu gehören auch Kombinationen zwischen allen einzelnen Darstellungen im Text, d. h. auf jeder Seite des Textes, in den Ansprüchen und auch Kombinationen zwischen verschiedenen Varianten im Text, in den Abmessungen und in den Abbildungen. Die zuvor dargestellten Details von Gerät und Verfahren sind in der Verlinkung dargestellt; es ist jedoch zu beachten, dass sie auch unabhängig voneinander und auch frei miteinander kombiniert werden können. Die in den Abbildungen dargestellten Verhältnisse der einzelnen Teile und Abschnitte zueinander sowie deren Abmessungen und Proportionen sind nicht als einschränkend zu verstehen. Einzelne Maße und Proportionen können jedoch von den dargestellten abweichen.

### Liste der Bezugsziffern

- 100: Schutzgehäuse
- 101: Körper
- 102: Tür
- 103: Rückschlagventil
- 104: Einspeisekanal
- 105: Kammer
- 106: elektrischer Anschluss
- 107: elektrisches Kabel
- 108: Außenfläche des Gehäuses
- 109: Innenfläche des Gehäuses

## Patentansprüche

1. Schutzgehäuse (100) für Batterien, Akkumulatoren und elektrische Zellen mit einem Körper (101), der mindestens eine innere Kammer (105) zur Aufnahme einer Batterie, eines Akkumulators und/oder elektrischer Zellen bildet, wobei die innere Kammer über mindestens eine Fläche verfügt, die mindestens eine Wand des Gehäuses bildet, und einen mit einem in ihr aufgenommenen Gegenstand ausgebildeten Hohlraum bildet, in dem sich Wasser (H2O) befindet, und dieser Hohlraum einen Einlasskanal zum Füllen des Hohlraums mit Wasser aufweist, und die innere Kammer mindestens eine Verbindung über ein elektrisches Kabel (107) mit der Außenseite des Gehäuses (100) und mindestens eine Innenfläche (109) des Gehäuses aufweist, die den Hohlraum bildet, in dem sich das thermisch leitende Wasser befindet, wobei das Schutzgehäuse ist **dadurch gekennzeichnet, dass** der Hohlraum mindestens ein Einwegventil zum Abbau eines Überdrucks besitzt.

2. Schutzgehäuse nach Anspruch 1, **dadurch gekennzeichnet, dass** jede die Außenfläche (108) bildende Kammer thermisch isoliert ist.

3. Schutzgehäuse nach Anspruch 1 oder 2, **dadurch gekennzeichnet, dass** das Schutzgehäuse (100) mindestens eine Tür (102) für den Zugang zur Kammer (105) und einen Anschluss für die Versorgung mindestens einer Akkubatterie und/oder elektrischen Zelle aufweist.

4. Schutzgehäuse nach Anspruch 1 oder 2, **dadurch gekennzeichnet, dass** im Inneren des Schutzgehäuses (100) eine Batterie, ein Akkumulator oder ähnliches herausnehmbar angeordnet ist.

5. Schutzgehäuse nach einem der vorhergehenden Ansprüche, **dadurch gekennzeichnet, dass** dem Einwegventil (103) ein Sensor und/oder eine Meldeeinrichtung nachgeschaltet ist, um den Dampfaustritt zu signalisieren.

6. Schutzgehäuse nach Anspruch 3 oder 5, **dadurch gekennzeichnet, dass** sich im Inneren der Tür (102) ein mit Wasser befüllbarer Hohlraum befindet.

7. Schutzgehäuse nach einem der vorhergehenden Ansprüche, **dadurch gekennzeichnet, dass** das in den Hohlräumen angeordnete Wasser mit mindestens einer Oberfläche in thermischem Kontakt mit der Kammer mindestens 30 % mehr thermische Energie aufnehmen kann als die in den in der Kammer angeordneten Batterien, Akkumulatoren und/oder Ladezellen vorhandene Energie.

## Claims

1. Protective housing (100) for batteries, accumulators and electric cells with a body (101) which forms at least an inner chamber (105) for accommodating a battery, an accumulator and/or electric cells, wherein this inner chamber extends over at least one surface forming at least one wall of the housing and forms a cavity formed with an object received therein, in which water (H2O) is present, and this cavity presents an inlet duct for filling the chamber with water, and the inner chamber has at least one connection via an electrical cable (107) to the outside of the housing (100) and at least one inner surface (109) of the housing forming the cavity in which the thermally conductive water is present, wherein the protective housing is **characterized in that** the cavity having at least one one-way valve for relieving excess pressure.

2. Protective housing according to Claim 1, **characterized in that** each chamber forming the outer surface (108) is thermally insulated.

3. Protective housing according to Claim 1 or 2, **characterized in that** the protective housing (100) has at least one door (102) for access to the chamber (105) and a connection for the supply of at least one rechargeable battery and/or electric cell.

4. Protective housing according to Claim 1 or 2, **characterized in that** a battery, an accumulator or the like is arranged in a removable manner inside the protective housing (100).

5. Protective housing according to one of the preceding claims, **characterized in that** a sensor and/or a signalling device is connected downstream of the one-way valve (103) in order to signal the escape of steam.

6. Protective housing according to Claim 3 or 5, **characterized in that** there is a cavity inside the door (102) which can be filled with water.

7. Protective housing according to one of the preceding claims, **characterized in that** the water inside in the cavities with at least one surface in thermal contact with the chamber can absorb at least 30% more thermal energy than the energy present in the batteries, accumulators and/or charging cells arranged in the chamber.

## Revendications

1. Boîtier de protection (100) pour batteries, accumulateurs et piles électriques avec un corps (101) qui forme au moins une chambre intérieure (105) pour loger une batterie, un accumulateur et/ou des piles électriques, dans lequel cette chambre intérieure s'étend sur au moins une surface formant au moins une paroi du boîtier et forme une cavité formée avec un objet reçu à l'intérieur, dans laquelle de l'eau (H2O) est présente, et cette cavité présente un conduit d'entrée pour remplir la chambre avec de l'eau, et la chambre intérieure a au moins une connexion via un câble électrique (107) à l'extérieur du boîtier (100) et au moins une surface intérieure (109) du boîtier formant la cavité dans laquelle l'eau thermiquement conductrice est présente, dans lequel le boîtier de protection est **caractérisé en ce que** la cavité a au moins une valve à sens unique pour soulager la pression excessive.

2. Boîtier de protection selon la revendication 1, **caractérisé en ce que** chaque chambre formant la surface extérieure (108) est thermiquement isolée.

3. Boîtier de protection selon la revendication 1 ou 2, **caractérisé en ce que** le boîtier de protection (100) comporte au moins une porte (102) d'accès à la chambre (105) et une connexion pour l'alimentation d'au moins une batterie rechargeable et/ou d'une pile électrique.

4. Boîtier de protection selon la revendication 1 ou 2, **caractérisé en ce qu'**une batterie, un accumulateur ou similaire est disposé de manière amovible à l'intérieur du boîtier de protection (100).

5. Boîtier de protection selon l'une des revendications précédentes, **caractérisé en ce qu'**un capteur et/ou un dispositif de signalisation est connecté en aval de la vanne unidirectionnelle (103) afin de signaler l'échappement de vapeur.

6. Boîtier de protection selon la revendication 3 ou 5, **caractérisé en ce qu'**il y a une cavité à l'intérieur de la porte (102) qui peut être remplie d'eau.

7. Boîtier de protection selon l'une des revendications précédentes, **caractérisé en ce que** l'eau contenue dans les cavités ayant au moins une surface en contact thermique avec la chambre peut absorber au moins 30% d'énergie thermique en plus que l'énergie présente dans les piles, accumulateurs et/ou cellules de charge disposés dans la chambre.
